# EUROPEAN PATENT APPLICATION

(11) **EP 4 538 583 A1**
(43) Date of publication of application: **16.04.2025**
(21) Application number: 22948039.7
(22) Date of filing: 24.06.2022
(51) Int. Cl.: F17C 3/04

(54) **LOW-TEMPERATURE LIQUEFIED GAS STORAGE TANK**

(71) Applicant: KAWASAKI JUKOGYO KABUSHIKI KAISHA, Kobe-shi, Hyogo 650-8670 (JP)
(72) Inventor: EGAMI, Takeshi, Kobe-shi, Hyogo 650-8670 (JP); IKEZAKI, Akihiro, Kobe-shi, Hyogo 650-8670 (JP); FUJII, Mahito, Kobe-shi, Hyogo 650-8670 (JP)
(74) Representative: Arnold & Siedsma
(86) International application number: PCT/JP2022/025411
(87) International publication number: WO 2023/248480

(57) **Abstract**

A cryogenic liquefied gas storage tank is a tank having a flat bottom cylindrical triple shell structure, and includes: an inner tank that stores cryogenic liquefied gas; an intermediate tank that encloses the inner tank with an inner insulation layer therebetween; and an outer tank that encloses the intermediate tank with an outer insulation layer therebetween. The intermediate tank is formed using steel for low temperature use.

## Description

### Technical Field

The present disclosure relates to a tank that includes an inner tank, an intermediate tank, and an outer tank, and stores cryogenic liquefied gas.

### Background Art

A flat bottom tank with a multi-shell structure is known as a tank for storing cryogenic liquefied gas such as liquefied hydrogen and liquefied natural gas. As the multi-shell tank, a tank having a triple shell structure and including an inner tank, an intermediate tank that encloses the inner tank, and an outer tank that encloses the intermediate tank is also known (for example, Patent Literature 1).

The triple shell tank can have excellent heat-insulating properties because cold insulation layers can be doubly constructed between the inner tank and the intermediate tank, and between the intermediate tank and the outer tank, and is suitable for storing cryogenic liquefied gas. However, in the triple shell tank, the tank will need to be constructed in three layers, which will result in a larger tank. This also poses a problem that construction of the triple shell tank will need a larger site area.

### Citation List

### Patent Literature

Patent Literature 1: Japanese Patent Application Laid-Open No. 55-20937

### Summary of Invention

An object of the present disclosure is to provide a cryogenic liquefied gas storage tank that enables compact tank design and reduction in the site area required for tank construction.

A cryogenic liquefied gas storage tank according to one aspect of the present disclosure is a tank having a flat bottom cylindrical triple shell structure, and includes: an inner tank that stores cryogenic liquefied gas; an intermediate tank that encloses the inner tank with an inner insulation layer therebetween; and an outer tank that encloses the intermediate tank with an outer insulation layer therebetween, in which the intermediate tank is formed using steel for low temperature use.

### Brief Description of Drawings

FIG. 1 is a cross-sectional view showing a triple shell tank according to a first embodiment of a cryogenic liquefied gas storage tank of the present disclosure.
FIG. 2 is a cross-sectional view showing a main part of a triple shell tank according to a second embodiment of the present disclosure.
FIG. 3 is a cross-sectional view showing a triple shell tank according to a third embodiment of the present disclosure.
FIG. 4 is a cross-sectional view showing a triple shell tank according to a fourth embodiment of the present disclosure.
FIG. 5 is a cross-sectional view showing a triple shell tank according to a fifth embodiment of the present disclosure.

### Description of Embodiments

Embodiments of a cryogenic liquefied gas storage tank according to the present disclosure will be described in detail below with reference to the drawings. The cryogenic liquefied gas storage tank of the present disclosure is a tank that stores the cryogenic liquefied gas and is a ground-mounted flat bottom tank. Examples of the cryogenic liquefied gas to be stored include liquefied hydrogen, liquid helium, liquid nitrogen, liquefied natural gas, or liquefied petroleum gas. In the following embodiments, a triple shell tank will be illustrated as the cryogenic liquefied gas storage tank.

### [First Embodiment]

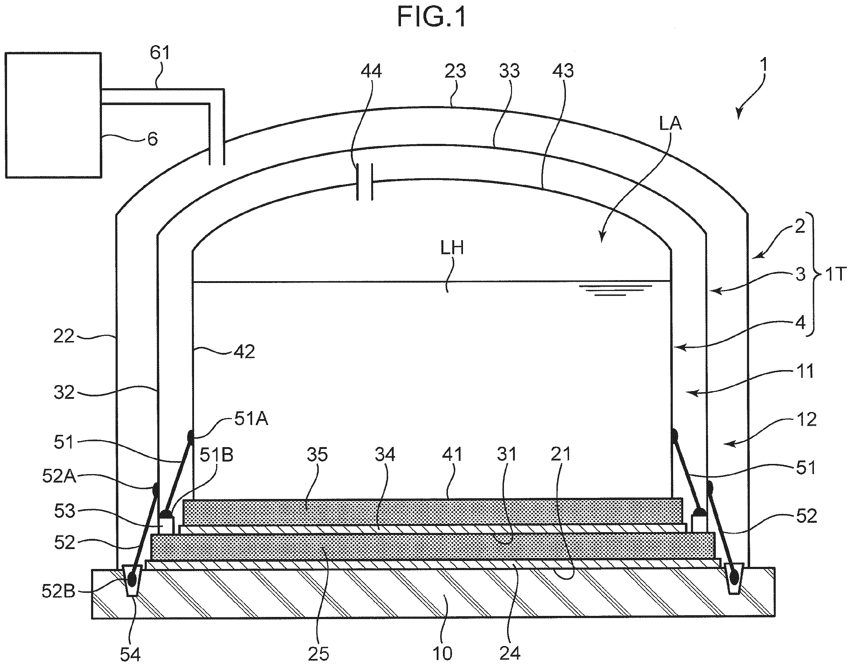

FIG. 1 is a cross-sectional view showing a triple shell tank 1 according to a first embodiment of the present disclosure. Here, the triple shell tank 1 that stores liquid hydrogen LH is illustrated. FIG. 1 is a vertical cross-sectional view of the triple shell tank 1. The triple shell tank 1 includes a tank foundation 10, a tank body 1T including an outer tank 2, an intermediate tank 3, and an inner tank 4 erected on the tank foundation 10, and a pressure regulating tank 6 attached to the tank body.

The tank foundation 10 is a concrete layer that constitutes the foundation of the triple shell tank 1. The tank foundation 10 has a larger size than the outer diameter of the outer tank 2. The tank body 1T has a flat bottom cylindrical shape. The outer tank 2, the intermediate tank 3, and the inner tank 4 all have a circular shape when viewed from above and are arranged concentrically. The inner tank 4 is a tank that actually stores the liquid hydrogen LH. The intermediate tank 3 encloses the inner tank 4 with an inner insulation layer 11 therebetween. The outer tank 2 encloses the intermediate tank 3 with an outer insulation layer 12 therebetween.

The outer tank 2 is a closed body constructed from metal such as carbon steel, and includes an outer tank bottom plate 21, an outer tank side plate 22, and an outer tank roof 23. The outer tank bottom plate 21 is constructed directly on the tank foundation 10 and has a disk-like shape. The outer tank side plate 22 is erected from the peripheral edge of the outer tank bottom plate 21 and has a cylindrical shape. The outer tank roof 23 is attached to the upper end of the outer tank side plate 22 to cover the upper opening of the cylindrical outer tank side plate 22, and has a dome-like shape.

The intermediate tank 3 is a closed body constructed from steel for low temperature use, and includes an intermediate tank bottom plate 31, an intermediate tank side plate 32, and an intermediate tank roof 33. The intermediate tank bottom plate 31 has a disk-like shape with a smaller diameter than the outer tank bottom plate 21. The intermediate tank side plate 32 is erected from the peripheral edge of the intermediate tank bottom plate 31 and has a cylindrical shape. The intermediate tank roof 33 is attached to the upper end of the intermediate tank side plate 32 and has a dome-like shape.

The steel for low temperature use used as the material for the intermediate tank 3 is a metal material having properties that make low-temperature embrittlement unlikely to occur, even under extremely low-temperature conditions. Austenitic stainless steel can be illustrated as the steel for low temperature use. In addition, the steel for low temperature use such as nickel steel and aluminum alloy may be used as a component for the intermediate tank 3.

Between the outer tank bottom plate 21 and the intermediate tank bottom plate 31, a first level concrete layer 24 and an outer bottom insulation layer 25 that constitute the bottom of the outer insulation layer 12 are interposed. The first level concrete layer 24 is, for example, a leveled concrete layer that is constructed on the outer tank bottom plate 21 and is constituted by concrete mixed with perlite. The outer bottom insulation layer 25 is a layer with heat-insulating properties disposed on the first level concrete layer 24. The outer bottom insulation layer 25 can be formed from an arrangement of inorganic block materials with heat-insulating properties, such as foam glass, for example. For example, autoclaved lightweight concrete may be constructed on the outer bottom insulation layer 25.

The inner tank 4 is a closed body constructed from the steel for low temperature use similar to the intermediate tank 3, and includes an inner tank bottom plate 41, an inner tank side plate 42, and an inner tank roof 43. The inner tank bottom plate 41 has a disk-like shape with a smaller diameter than the intermediate tank bottom plate 31. The inner tank side plate 42 is erected from the peripheral edge of the inner tank bottom plate 41 and has a cylindrical shape. The inner tank roof 43 is attached to the upper end of the inner tank side plate 42 and has a dome-like shape. The liquid hydrogen LH is stored inside the inner tank 4. Note that the upper layer part of the inner tank 4 forms a vapor phase section LA where hydrogen gas vaporized from the liquid hydrogen LH accumulates.

Between the intermediate tank bottom plate 31 and the inner tank bottom plate 41, a second level concrete layer 34 and an inner bottom insulation layer 35 that constitute the bottom of the inner insulation layer 11 are interposed. The second level concrete layer 34 is constituted by, for example, concrete mixed with perlite and is constructed on the intermediate tank bottom plate 31. The inner bottom insulation layer 35 is a layer with heat-insulating properties disposed on the second level concrete layer 34. The inner bottom insulation layer 35 can be formed, for example, using foam glass blocks or the like. For example, autoclaved lightweight concrete may be constructed on the inner bottom insulation layer 35.

There is a gap of a predetermined width that is used as a heat-insulating space formed between the inner tank 4 and the intermediate tank 3, and between the intermediate tank 3 and the outer tank 2. The gap between the inner tank 4 and the intermediate tank 3 is used as the inner insulation layer 11, whereas the gap between the intermediate tank 3 and the outer tank 2 is used as the outer insulation layer 12. The inner insulation layer 11 and the outer insulation layer 12 are filled with powder heat-insulating materials to enhance ability to retain cold temperatures. Granular perlite can be used as the powder heat-insulating material, for example. Note that the area between the side plates 22 and 32 and between the side plates 32 and 42 surrounding the sides of the liquid hydrogen LH to be stored may be filled with heat-insulating materials such as glass wool in addition to the granular perlite. In this case, the glass wool, for example, if attached to the outer surface of the inner tank side plate 42 and the outer surface of the intermediate tank side plate 32, can protect the inner tank 4 and the intermediate tank 3 from the powder pressure of perlite. The bottom of the inner insulation layer 11 is the second level concrete layer 34 and the inner bottom insulation layer 35 described above. The bottom of the outer insulation layer 12 is the first level concrete layer 24 and the outer bottom insulation layer 25.

The inner insulation layer 11 and the outer insulation layer 12 are filled with a predetermined seal gas. As the seal gas for the inner insulation layer 11, it is preferable to use hydrogen gas or helium gas. That is, it is preferable to use the same type of gas as the cryogenic liquefied gas stored in the inner tank 4 as the seal gas. If hydrogen gas is used as the seal gas, it is preferable to set the pressure in the inner insulation layer 11 substantially the same as the vapor phase pressure in the inner tank 4. If these requirements are met, the liquefaction or solidification of the seal gas due to the cold heat of the liquid hydrogen LH stored in the inner tank 4 can be suppressed. The outer insulation layer 12 is filled with inert gas that has a higher boiling point than the hydrogen gas, for example, nitrogen gas, as the seal gas. Filling the seal gas into the outer insulation layer 12 prevents air and moisture from entering.

To realize the above-mentioned request for the seal gas and pressure in the inner insulation layer 11, in the present embodiment, the inner tank roof 43 is equipped with a communication pipe 44. The communication pipe 44 is a pipe that causes the inner space of the inner tank 4 to communicate with the space in the inner insulation layer 11. By providing the communication pipe 44, the seal gas can be supplied from the inner tank 4 to the inner insulation layer 11. That is, in the upper space of the inner tank 4, there exists the vapor phase section LA formed from the hydrogen gas vaporized from the liquid hydrogen LH. The hydrogen gas in the vapor phase section LA can be introduced into the inner insulation layer 11 through the communication pipe 44 as the seal gas. The inner insulation layer 11 and the inner space of the inner tank 4 communicate with each other through the communication pipe 44, making the pressure in the inner insulation layer 11 and the vapor phase pressure in the inner tank 4 to be equal to each other. Note that without using the communication pipe 44, a mechanism that independently adjusts the pressure in the inner insulation layer 11 may be installed.

The vapor phase pressure in the inner tank 4 is set to, for example, about 50 kPaG. In this case, it is preferable to set the pressure in the inner insulation layer 11 to the same 50 kPaG, but may differ slightly if the pressure is within the range that can be treated as substantially the same as the vapor phase pressure in the inner tank 4. That is, as long as the pressure difference is not significant enough to cause damage to the inner tank 4, the pressure in the inner insulation layer 11 and the vapor phase pressure in the inner tank 4 may be different.

The pressure in the outer insulation layer 12 is set lower than the pressure in the inner insulation layer 11. This is because there is a concern that if the pressure in the outer insulation layer 12 becomes higher than the pressure in the inner insulation layer 11, pressing force will act on the intermediate tank 3, causing the intermediate tank side plate 32 to buckle. The pressure in the outer insulation layer 12 can be set to, for example, about ±0.5 kPaG. Setting the pressure in the outer insulation layer 12 in this manner also has the advantage of preventing air from entering the outer insulation layer 12.

The outer insulation layer 12 is a closed space that is adjacent to the atmosphere via the wall surface of the outer tank 2 and has no communication with other spaces. Therefore, this space will be affected by fluctuations in the atmospheric pressure. For example, if the atmospheric pressure declines, the pressure in the outer insulation layer 12 will increase relatively. In light of this point, the present embodiment provides the pressure regulating tank 6 to reduce the impact of fluctuations in the atmospheric pressure.

The pressure regulating tank 6 stores the seal gas of the outer insulation layer 12, nitrogen gas in the present embodiment. The pressure regulating tank 6 communicates with the outer insulation layer 12 through a pressure regulating pipe 61, and adjusts the pressure in the outer insulation layer 12 by moving the seal gas in and out according to the pressure in the outer insulation layer 12. Specifically, when the pressure in the outer insulation layer 12 increases, the seal gas in the outer insulation layer 12 is drawn into the pressure regulating tank 6 through the pressure regulating pipe 61, and is taken back from the pressure regulating tank 6 to the outer insulation layer 12 when the pressure decreases.

To prevent the inner tank side plate 42 and the intermediate tank side plate 32 from floating up, the triple shell tank 1 is equipped with an inner tank anchor strap 51 and an intermediate tank anchor strap 52. The inner tank anchor strap 51 is coupled to the inner tank side plate 42 at an upper end 51A and is coupled to the intermediate tank side plate 32 and the intermediate tank bottom plate 31 via a bracket 53 at a lower end 51B. The side edge of the bracket 53 is welded near the lower end of the intermediate tank side plate 32, and the lower edge of the bracket 53 is welded near the outer peripheral edge of the intermediate tank bottom plate 31. The intermediate tank anchor strap 52 is coupled to the intermediate tank side plate 32 at an upper end 52A and is fixed to the tank foundation 10 at a lower end 52B. The lower end 52B is fixed to the tank foundation 10 via an anchor box 54 embedded in the tank foundation 10. The anchor straps 51 and 52 are disposed in a line in the circumferential direction at a predetermined pitch. By installing the anchor straps 51 and 52, it is possible to prevent the intermediate tank side plate 32 and the inner tank side plate 42 from floating up, thereby improving earthquake resistance.

In the triple shell tank 1 according to the first embodiment described above, since the intermediate tank 3 is formed using the steel for low temperature use, the intermediate tank 3 has excellent resistance to low-temperature embrittlement. Therefore, even if the heat-insulation width for the inner tank 4, that is, the width of the inner insulation layer 11 is reduced, the low-temperature embrittlement of the intermediate tank 3 is unlikely to occur. If the gap between the intermediate tank side plate 32 and the inner tank side plate 42 is set short, the intermediate tank side plate 32 is easily affected by the cold heat of the liquid hydrogen LH stored in the inner tank 4. However, if the intermediate tank side plate 32 includes the steel for low temperature use, the low-temperature embrittlement is unlikely to occur even if the cold heat affects the intermediate tank side plate 32. Therefore, the inner insulation layer 11 can be set to have a narrow width, and the outer diameter of the tank body 1T can be made compact as well. This can reduce the amount of land area required for construction of the triple shell tank 1.

Since the inner insulation layer 11 is filled with hydrogen gas as the seal gas, it is difficult for the seal gas to become concentrated. In particular, since the communication pipe 44 is used to cause the inner space of the inner tank 4 and the inner insulation layer 11 to communicate with each other, there is an advantage in being able to utilize the hydrogen gas present in the vapor phase section LA of the inner tank 4 without the need for a separate hydrogen gas supply system. In addition, it is possible to set the pressure in the inner insulation layer 11 and the pressure in the vapor phase section LA to be equal to each other, without providing any particular pressure adjustment means. Furthermore, the pressure in the outer insulation layer 12 is set lower than the pressure in the inner insulation layer 11, and the pressure regulating tank 6 is provided as a pressure buffer, allowing suppression of buckling of the intermediate tank 3.

### [Second Embodiment]

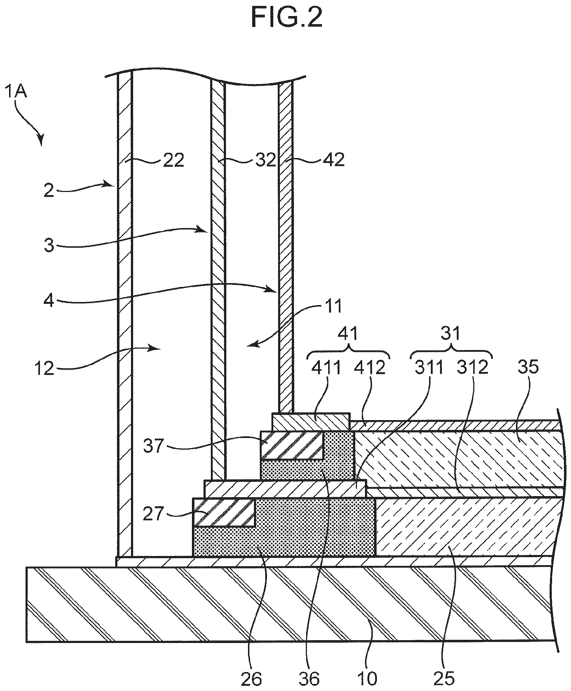

FIG. 2 is a cross-sectional view showing a main part of a triple shell tank 1A according to a second embodiment. The second embodiment illustrates the triple shell tank 1A including a reinforcement structure in the place that bears the load of an intermediate tank side plate 32 and an inner tank side plate 42. Note that in FIG. 2, the description of level concrete layers 24 and 34 shown in FIG. 1 is omitted. The triple shell tank 1A has reinforcement structures in an intermediate tank bottom plate 31 forming the bottom surface of an intermediate tank 3 and an inner tank bottom plate 41 forming the bottom surface of an inner tank 4, and also has reinforcement structures in an outer bottom insulation layer 25 and an inner bottom insulation layer 35. The reinforcement structures can be applied to the tanks of the first embodiment described above and the second to fifth embodiments described below.

The intermediate tank bottom plate 31 is formed using steel for low temperature use and includes an intermediate tank annular plate 311 that constitutes the annular part near the outer periphery of the intermediate tank bottom plate 31, and a bottom plate general part 312 inside the intermediate tank annular plate 311. Similarly, the inner tank bottom plate 41 includes an inner tank annular plate 411 that constitutes the annular part near the outer periphery of the inner tank bottom plate 41 and a bottom plate general part 412 inside the inner tank annular plate 411. The intermediate tank annular plate 311 is formed thicker than the bottom plate general part 312. The intermediate tank side plate 32 is erected on the intermediate tank annular plate 311. The intermediate tank side plate 32 is assembled by stacking multiple annular tiers, each formed by arranging multiple side plate pieces in a circular shape. During the construction of the intermediate tank side plate 32, a rail for transporting the side plate pieces is constructed on an outer tank roof 23.

The inner tank annular plate 411 is also formed thicker than the bottom plate general part 412. The inner tank side plate 42 is erected on the inner tank annular plate 411. The inner tank side plate 42 is also assembled by stacking multiple annular tiers, each formed by arranging multiple side plate pieces in a circular shape. Although not shown in FIG. 2, a thickened outer tank annular plate may be provided near the outer periphery of an outer tank bottom plate 21.

The outer bottom insulation layer 25 that constitutes the bottom surface part of an outer insulation layer 12 includes a first ring part 26 near the radial outer periphery. The first ring part 26 is disposed in a ring shape below the intermediate tank annular plate 311 and is a concrete layer with high strength such as a perlite concrete block, for example. At the place that directly bears the load of the intermediate tank side plate 32 in the first ring part 26, a concrete layer 27 (solid insulation material with high strength) is disposed with higher strength than the general part of the outer bottom insulation layer 25 inside the intermediate tank side plate 32 and the body part of the first ring part 26.

The inner bottom insulation layer 35 that constitutes the bottom surface part of an inner insulation layer 11 includes a second ring part 36 near the radial outer periphery. The second ring part 36 is disposed in a ring shape below the inner tank annular plate 411 within the width of the first ring part 26. The second ring part 36 can also be constructed using concrete, such as a perlite concrete block, for example. At the place that directly bears the load of the inner tank side plate 42 in the second ring part 36, a concrete layer 37 is disposed with higher strength than the general part of the inner bottom insulation layer 35 inside the inner tank side plate 42 and the body part of the second ring part 36.

The triple shell tank 1A according to the second embodiment can improve the strength near the lower peripheral edge of the intermediate tank 3 by thickening the intermediate tank annular plate 311. Similarly, by thickening the inner tank annular plate 411, the strength near the lower peripheral edge of the inner tank 4 can be improved. The reinforced concrete layer 27 is disposed at the place that directly bears the load of the intermediate tank side plate 32, allowing the tank to have a structure that is less likely to sink even when subjected to the weight of the tank or loads such as earthquakes.

### [Third Embodiment]

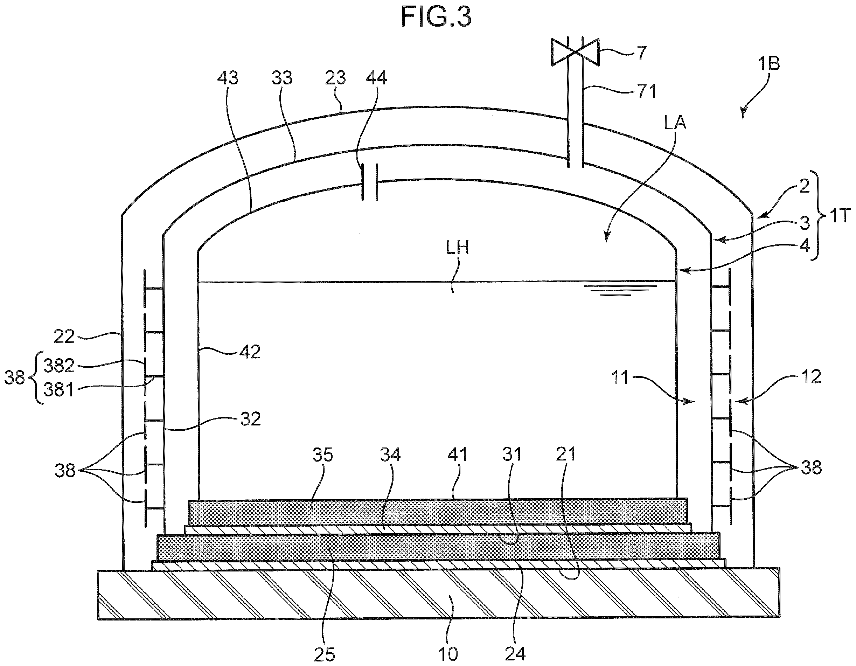

FIG. 3 is a cross-sectional view showing a triple shell tank 1B according to a third embodiment. The third embodiment illustrates the triple shell tank 1B having a protective structure for a tank body 1T. The triple shell tank 1B includes reinforcement materials 38 including rib-like members protruding from an intermediate tank side plate 32, and a safety valve 7 that regulates an increase in internal pressure of an intermediate tank 3. Note that parts denoted with the same reference signs as in FIG. 1, which have been described with reference to FIG. 1 earlier, will not be described here (the same applies to the fourth and fifth embodiments described later).

The reinforcement materials 38 are T-shaped members in cross section, each constituted by a joint assembly of a horizontal plate 381 and a vertical plate 382, both formed from flat steel plates. The horizontal plate 381 protrudes substantially horizontally from the outer peripheral surface of the intermediate tank side plate 32 to the radial outside of the intermediate tank 3. The horizontal plate 381 is fixed to the entire outer peripheral surface of the intermediate tank side plate 32 by welding. The vertical plate 382 is fixed to the protruding end of the horizontal plate 381 by welding. The joint assembly of the horizontal plate 381 and the vertical plate 382 forms an annular reinforcement rib that surrounds the outer peripheral surface of the intermediate tank side plate 32 in an annular manner. Multiple tiers of the annular reinforcement rib are arranged vertically on the outer peripheral surface of the intermediate tank side plate 32.

The safety valve 7 is attached to a withdrawal pipe 71 withdrawn from the intermediate tank 3. The proximal end of the withdrawal pipe 71 opens into an interlayer between an intermediate tank roof 33 and an inner tank roof 43, that is, into an inner insulation layer 11, and the tip protrudes from the tank body 1T to the outside. The safety valve 7 is a valve that opens when the pressure in the inner insulation layer 11 exceeds a predetermined threshold.

The triple shell tank 1B according to the third embodiment can increase the strength of the intermediate tank side plate 32 by using the reinforcement materials 38. That is, by welding the rib-shaped reinforcement materials 38 to the outer peripheral surface of the intermediate tank side plate 32, it is possible to increase the rigidity more than the intermediate tank side plate 32 with a simple cylindrical structure. Therefore, for example, even if the lateral pressure increases due to the cold insulation material of an outer insulation layer 12, buckling of the intermediate tank side plate 32 can be suppressed. Note that the T-shaped reinforcement materials 38 shown in FIG. 3 are just one example, and the reinforcement materials 38 may be any rib-shaped member capable of improving the rigidity of the intermediate tank side plate 32.

Since the triple shell tank 1B includes the safety valve 7, if the pressure in the intermediate tank 3 becomes high pressure that exceeds a predetermined value, the pressure can be released through the safety valve 7. In particular, in the present embodiment, since the inner space of the inner tank 4 and the inner insulation layer 11 communicate with each other through a communication pipe 44, the operation of the safety valve 7 also suppresses the pressure increase in an inner tank 4. Therefore, the maintainability of the tank body 1T is enhanced. Note that at least one of the reinforcement materials 38 and the safety valve 7 may be applied to the triple shell tank 1 in the first embodiment.

In the third embodiment, various modified embodiments can be applied. FIG. 3 shows an example in which the cross-sectional shape of the reinforcement materials 38 is T-shaped, but the cross-sectional shape of the reinforcement materials 38 may be I-shaped, L-shaped, or H-shaped.

FIG. 3 shows an example in which the reinforcement plates 38 are provided to protrude radially outward from the intermediate tank side plate 32, but the reinforcement plates 38 may be attached radially inward from the intermediate tank side plate 32. The horizontal plates 381 of the reinforcement materials 38 may be fixed to the intermediate tank side plate 32, as well as the horizontal plates 381 may be fixed to the vertical plates 382 by a method other than welding.

### [Fourth Embodiment]

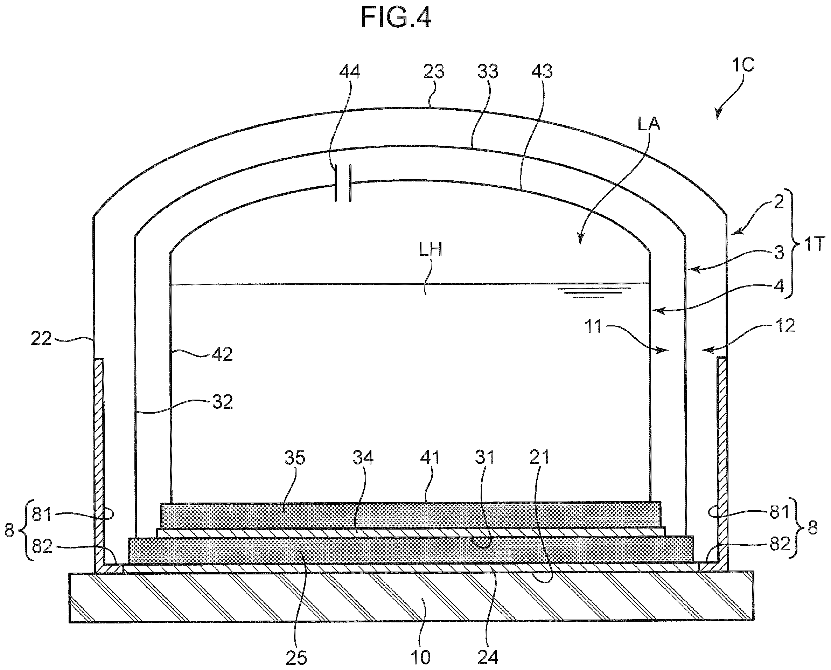

FIG. 4 is a cross-sectional view showing a triple shell tank 1C according to a fourth embodiment. The fourth embodiment illustrates the triple shell tank 1C in which a thermal reinforcement material 8 is disposed inside an outer tank 2. It is necessary to assume that liquid hydrogen LH will leak due to damage to an inner tank 4 that stores the liquid hydrogen LH, and an intermediate tank 3 that encloses the inner tank 4. The thermal reinforcement material 8 is disposed to improve the cold heat resistance of an outer tank side plate 22 and an outer tank bottom plate 21 to prevent damage to the outer tank side plate 22 and the outer tank bottom plate 21 due to the low-temperature embrittlement in the unlikely event that a leak of the liquid hydrogen LH occurs.

The thermal reinforcement material 8 is formed, for example, using steel for low temperature use similar to the intermediate tank 3 and includes a side part 81 and a bottom part 82. The side part 81 extends upward from the lowermost part at a predetermined height inside the outer tank side plate 22. The height of the side part 81 is set with reference to the maximum storage volume of the liquid hydrogen LH, the volumes of an inner insulation layer 11 and an outer insulation layer 12, and the like. The bottom part 82 is disposed near the inner side of the outer periphery of the outer tank bottom plate 21. FIG. 4 shows an example where the bottom part 82 is disposed to fill the gap between the outer peripheral edge of a first level concrete layer 24 and the outer tank side plate 22.

As the thermal reinforcement material 8, a heat insulating material may be used instead of the steel for low temperature use. In this case, for example, the side part 81 can be formed using rigid urethane foam, and the bottom part 82 can be formed using perlite level concrete. An aspect may also be adopted in which the heat insulating material formed inside the outer tank bottom plate 21 and the outer tank side plate 22 is covered with the steel for low temperature use. Furthermore, the heat insulating material may be installed inside an outer tank roof 23.

In the triple shell tank 1C according to the fourth embodiment, in the unlikely event that the liquid hydrogen LH leaks from the inner tank 4 and the intermediate tank 3, the liquid hydrogen LH will come into contact with the thermal reinforcement material 8 disposed inside the outer tank side plate 22. Therefore, damage to the outer tank 2 caused by the low-temperature embrittlement can be prevented, and also the outflow of the liquid hydrogen LH outside a tank body 1T can be suppressed as well.

### [Fifth Embodiment]

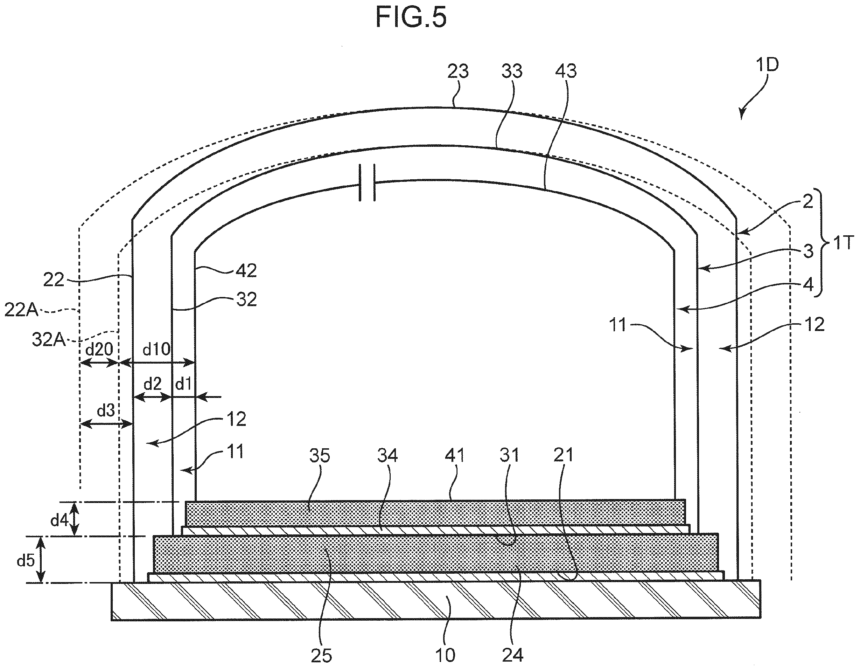

FIG. 5 is a cross-sectional view showing a triple shell tank 1D according to a fifth embodiment. The fifth embodiment shows the triple shell tank 1D focusing on the relationship between the width of an inner insulation layer 11 and the width of an outer insulation layer 12. The inner insulation layer 11 has a width d1 in the radial direction of a tank body 1T. The outer insulation layer 12 has a radial width d2 that is greater than the width d1.

As described above, a seal gas is enclosed in the outer insulation layer 12. The width d1 is set to a width that can ensure a heat-insulating space in which the temperature on the outer peripheral surface of an intermediate tank side plate 32 is higher than the condensation temperature of the seal gas. When the seal gas is a nitrogen gas, the width d1 is selected that allows the temperature on the outer peripheral surface of the intermediate tank side plate 32 to be set equal to or higher than -196°C, which is the boiling point of nitrogen. Even when exposed to such extremely low temperatures, low-temperature embrittlement does not occur because an intermediate tank 3 is formed from steel for low temperature use. In other words, since the intermediate tank 3 is a structure of the steel for low temperature use, the width d1 can be set to a narrow width. The width d2 of the outer insulation layer 12 is set to a width that can limit the amount of heat input from an outer tank side plate 22 that is at room temperature to the intermediate tank side plate 32. The ratio of the width d2 of the outer insulation layer 12 to the width d1 of the inner insulation layer 11 can be set, for example, in the range of 1:1.5 to 5, and more preferably, in the range of 1:1.8 to 3.5.

It becomes easier to make the tank body 1T more compact because the width d1 of the inner insulation layer 11 can be set narrow. If the intermediate tank 3 is not formed using the steel for low temperature use, the width d10 of an appropriate length is required to prevent low-temperature embrittlement in the intermediate tank side plate 32. As a result, the outer diameter of the tank body 1T increases. The dotted lines in FIG. 5 schematically show the positions of an outer tank side plate 22A and an intermediate tank side plate 32A when the steel for low temperature use is not adopted. The width d10 between an inner tank side plate 42 and the intermediate tank side plate 32A needs to be set significantly longer than the width d1 of the present embodiment. Note that a width d20 between the intermediate tank side plate 32A and the outer tank side plate 22A is slightly larger than the width d2 of the outer insulation layer 12 of the present embodiment, but the length of width d10 + width d20 is significantly longer than the width d1 + width d2 of the present embodiment. Since the width d1 can be set to a narrow width in the present embodiment, the outer diameter of the tank body 1T can be made smaller by the width d3 with respect to the outer tank side plate 22A. The outer diameter of the intermediate tank 3 can also be reduced, which has the advantage of reducing the amount of steel used more than when the steel for low temperature use is not used. Furthermore, since the width d2 can be set relatively wide, it is possible to increase the heat-insulating properties of the outer insulation layer 12. In this case, if a member excellent in the heat-insulating properties is enclosed in the outer insulation layer 12, the width d2 can be set to a relatively small size, contributing to making the tank body 1T more compact.

On the bottom part side of the tank body 1T, a second level concrete layer 34 and an inner bottom insulation layer 35 that constitute the bottom part of the inner insulation layer 11 have a combined thickness of d4. A first level concrete layer 24 and an outer bottom insulation layer 25 that constitute the bottom part of the outer insulation layer 12 have a combined thickness of d5. The thickness d5 of the outer bottom insulation layer 25 is set to be thicker than the thickness d4 of the inner bottom insulation layer 35. As a result of an intermediate tank bottom plate 31 also being formed using the steel for low temperature use, the thickness d4 can be set relatively thin, resulting in the thickness d5 being thicker. This makes it possible to effectively increase the heat-insulating properties of the outer insulation layer 12.

### [Other Embodiments]

Various embodiments of the present disclosure have been described above, but the present disclosure is not limited to the above embodiments, and for example, the following embodiments can be employed.
(1) The above embodiments have illustrated the dome-shaped roof in which the side plates 32 and 42 and the roofs 33 and 43 of the intermediate tank 3 and the inner tank 4 are integrated. Of these, the inner tank roof 43 may be constructed using the suspended roof method. If the inner tank roof 43 is constructed using the suspended roof method, the inner tank roof 43 will be supported by suspending materials suspended from the intermediate tank roof 33. A sealant is applied to the joint between the inner tank side plate 42 and the inner tank roof 43.
(2) The above embodiments have illustrated a pipe that simply penetrates the inner tank roof 43 as the communication pipe 44 that causes the inner space of the inner tank 4 and the inner insulation layer 11 to communicate with each other. To facilitate maintenance, part of the communication pipe 44 may be piped via a route that passes outside the tank body 1T.
(3) The above embodiments have illustrated the ground-based triple shell tanks 1 and 1A to 1D as the cryogenic liquefied gas storage tank. The cryogenic liquefied gas storage tank is not limited to the ground-based tank, but may be a type in which part of the tank is buried underground, such as a pit-in type.

### [Conclusion of Present Disclosure]

A cryogenic liquefied gas storage tank according to one aspect of the present disclosure is a tank having a flat bottom cylindrical triple shell structure, and includes: an inner tank that stores cryogenic liquefied gas; an intermediate tank that encloses the inner tank with an inner insulation layer therebetween; and an outer tank that encloses the intermediate tank with an outer insulation layer therebetween, in which the intermediate tank is formed using steel for low temperature use.

This cryogenic liquefied gas storage tank has excellent resistance to low-temperature embrittlement because the intermediate tank is formed using the steel for low temperature use. Therefore, even if the width of the inner insulation layer is reduced, the low-temperature embrittlement of the intermediate tank does not occur. This can reduce the amount of land area required for construction of the cryogenic liquefied gas storage tank.

In the above cryogenic liquefied gas storage tank, the inner insulation layer may include a seal gas including a gas of an identical type to the cryogenic liquefied gas stored in the inner tank.

According to this aspect, the seal gas is less likely to liquefy or solidify due to the cold heat of the liquefied gas stored in the inner tank. Since the raw material for the seal gas is present in the inner tank, it is easy to procure the seal gas.

In the above cryogenic liquefied gas storage tank, pressure in the inner insulation layer is preferably set to be substantially identical to vapor phase pressure in the inner tank.

According to this aspect, the concentration of the seal gas included in the inner insulation layer can be suppressed. Note that "substantially identical" means that the difference between the pressure in the inner insulation layer and the vapor phase pressure in the inner tank is acceptable, provided that the pressure difference is not significant enough to cause damage to the inner tank.

The above cryogenic liquefied gas storage tank may further include a communication pipe that causes inner space of the inner tank and the inner insulation layer to communicate with each other.

According to this aspect, it is possible to constantly supply the seal gas from the vapor phase section of the inner tank to the inner insulation layer. The pressure in the inner insulation layer and the vapor phase pressure in the inner tank can be set to be substantially identical without requiring any special pressure adjustment means.

The above cryogenic liquefied gas storage tank may have an aspect in which the outer insulation layer includes a seal gas including an inert gas, and pressure in the outer insulation layer is lower than the pressure in the inner insulation layer.

According to this aspect, the seal gas can be used to protect the outer insulation layer from moisture. Since the pressure in the outer insulation layer is set lower than the pressure in the inner insulation layer, it becomes easier to prevent air from entering the outer insulation layer 12.

The above cryogenic liquefied gas storage tank may further include a pressure regulating tank that communicates with the outer insulation layer and stores the inert gas, in which the pressure regulating tank adjusts the pressure in the outer insulation layer by letting the inert gas in and out according to pressure fluctuation in the outer insulation layer.

According to this aspect, the pressure in the outer insulation layer can be adjusted according to fluctuations in the atmospheric pressure, thereby reducing the impact of fluctuations in the atmospheric pressure.

The above cryogenic liquefied gas storage tank may have an aspect in which the intermediate tank includes an intermediate tank bottom plate that forms a bottom surface of the intermediate tank, the intermediate tank bottom plate includes an intermediate tank annular plate that constitutes an annular part near outer periphery of the intermediate tank bottom plate, and a bottom plate general part inside the intermediate tank annular plate, and the intermediate tank annular plate is thicker than the bottom plate general part.

According to this aspect, the thickened intermediate tank annular plate can improve the strength near the lower peripheral edge of the intermediate tank.

In the above cryogenic liquefied gas storage tank, the intermediate tank may include an intermediate tank side plate that forms a side surface of the intermediate tank, the outer insulation layer may include an outer bottom insulation layer that constitutes a bottom part of the outer insulation layer, and the outer bottom insulation layer may include a solid insulation material that is stronger in strength than a general part of the outer bottom insulation layer that is located inside the intermediate tank side plate in a place that bears a load from the intermediate tank side plate.

According to this aspect, since the part of the outer insulation layer that bears the load from the intermediate tank side plate is constituted by a high-strength solid insulation material, this structure makes it difficult for the tank to sink even when subjected to the tank's own weight or loads such as earthquake.

In the above cryogenic liquefied gas storage tank, the intermediate tank may include an intermediate tank side plate that forms a side surface of the intermediate tank, and a reinforcement material that includes a rib-like member protruding from the intermediate tank side plate.

According to this aspect, the strength of the intermediate tank side plate can be increased by using the reinforcement material. Therefore, the buckling of the intermediate tank side plate can be suppressed.

The above cryogenic liquefied gas storage tank may further include a safety valve that regulates an increase in internal pressure of the intermediate tank.

According to this aspect, if the pressure in the intermediate tank becomes high pressure that exceeds a predetermined value, the pressure can be released through the safety valve.

The above cryogenic liquefied gas storage tank may further include a thermal reinforcement material disposed at least inside a bottom part and a side part of the outer tank.

According to this aspect, in the unlikely event that the cryogenic liquefied gas leaks from the inner tank, the thermal reinforcement material is disposed inside the outer tank, preventing the outer tank from being damaged by the low-temperature embrittlement.

In the above cryogenic liquefied gas storage tank, the outer insulation layer may include a seal gas including an inert gas, and a width of the outer insulation layer may be set wider than a width of the inner insulation layer. In this case, a ratio of the width of the outer insulation layer to the width of the inner insulation layer can be set in a range of 1 : 1.5 to 5. More preferably, the ratio can be set in a range of 1 : 1.8 to 3.5.

According to this aspect, it is possible to increase the heat-insulating properties of the outer insulation layer. As a result, the width of the inner insulation layer can be set relatively narrow, making it easier to make the entire tank more compact. The outer diameter of the intermediate tank can also be reduced by using the steel for low temperature use in the intermediate tank, which has the advantage of reducing the amount of steel used more than when the steel for low temperature use is not used.

The above cryogenic liquefied gas storage tank may have an aspect in which the outer insulation layer includes an outer bottom insulation layer that is disposed between a bottom plate of the outer tank and a bottom plate of the intermediate tank, the inner insulation layer includes an inner bottom insulation layer that is disposed between a bottom plate of the intermediate tank and a bottom plate of the inner tank, and a thickness of the outer bottom insulation layer is greater than a thickness of the inner bottom insulation layer.

According to this aspect, by using the steel for low temperature use for the intermediate tank, the inner bottom insulation layer can be made thinner, and the vertical size of the tank can be made more compact. As a result, the thickness of the outer bottom insulation layer is greater than the thickness of the inner bottom insulation layer, making it possible to increase the heat-insulation effect by the outer bottom insulation layer.

## Claims

1. A cryogenic liquefied gas storage tank having a flat bottom cylindrical triple shell structure, the cryogenic liquefied gas storage tank comprising:
an inner tank that stores cryogenic liquefied gas;
an intermediate tank that encloses the inner tank with an inner insulation layer therebetween; and
an outer tank that encloses the intermediate tank with an outer insulation layer therebetween,
wherein the intermediate tank is formed using cryogenic steel.

2. The cryogenic liquefied gas storage tank according to claim 1, wherein the inner insulation layer includes a seal gas including a gas of an identical type to the cryogenic liquefied gas stored in the inner tank.

3. The cryogenic liquefied gas storage tank according to claim 2, wherein pressure in the inner insulation layer is set to be substantially identical to vapor phase pressure in the inner tank.

4. The cryogenic liquefied gas storage tank according to claim 3, further comprising a communication pipe that causes inner space of the inner tank and the inner insulation layer to communicate with each other.

5. The cryogenic liquefied gas storage tank according to any one of claims 1 to 4, wherein
the outer insulation layer includes a seal gas including an inert gas, and
pressure in the outer insulation layer is lower than the pressure in the inner insulation layer.

6. The cryogenic liquefied gas storage tank according to claim 5, further comprising a pressure regulating tank that communicates with the outer insulation layer and stores the inert gas,
wherein the pressure regulating tank adjusts the pressure in the outer insulation layer by letting the inert gas in and out according to pressure fluctuation in the outer insulation layer.

7. The cryogenic liquefied gas storage tank according to any one of claims 1 to 6, wherein
the intermediate tank includes an intermediate tank bottom plate that forms a bottom surface of the intermediate tank,
the intermediate tank bottom plate includes an intermediate tank annular plate that constitutes an annular part near outer periphery of the intermediate tank bottom plate, and a bottom plate general part inside the intermediate tank annular plate, and
the intermediate tank annular plate is thicker than the bottom plate general part.

8. The cryogenic liquefied gas storage tank according to any one of claims 1 to 6, wherein
the intermediate tank includes an intermediate tank side plate that forms a side surface of the intermediate tank,
the outer insulation layer includes an outer bottom insulation layer that constitutes a bottom part of the outer insulation layer, and
the outer bottom insulation layer includes a solid insulation material that is stronger in strength than a general part of the outer bottom insulation layer that is located inside the intermediate tank side plate in a place that bears a load from the intermediate tank side plate.

9. The cryogenic liquefied gas storage tank according to any one of claims 1 to 6, wherein the intermediate tank includes an intermediate tank side plate that forms a side surface of the intermediate tank, and a reinforcement material that includes a rib-like member protruding from the intermediate tank side plate.

10. The cryogenic liquefied gas storage tank according to any one of claims 1 to 9, further comprising a safety valve that regulates an increase in internal pressure of the intermediate tank.

11. The cryogenic liquefied gas storage tank according to any one of claims 1 to 10, further comprising a thermal reinforcement material disposed at least inside a bottom part and a side part of the outer tank.

12. The cryogenic liquefied gas storage tank according to any one of claims 1 to 11, wherein
the outer insulation layer includes a seal gas including an inert gas, and
a width of the outer insulation layer is wider than a width of the inner insulation layer.

13. The cryogenic liquefied gas storage tank according to claim 12, wherein a ratio of the width of the outer insulation layer to the width of the inner insulation layer is set in a range of 1 : 1.5 to 5.

14. The cryogenic liquefied gas storage tank according to any one of claims 1 to 11, wherein
the outer insulation layer includes an outer bottom insulation layer that is disposed between a bottom plate of the outer tank and a bottom plate of the intermediate tank,
the inner insulation layer includes an inner bottom insulation layer that is disposed between a bottom plate of the intermediate tank and a bottom plate of the inner tank, and
a thickness of the outer bottom insulation layer is greater than a thickness of the inner bottom insulation layer.
